(19) Europäisches Patentamt
European Patent Office
Office européen des brevets

(11) Veröffentlichungsnummer: **0 038 056**
**B1**

(12) # EUROPÄISCHE PATENTSCHRIFT

(45) Veröffentlichungstag der Patentschrift: **31.07.85**

(51) Int. Cl.[4]: **F 16 L 37/28**

(21) Anmeldenummer: **81102798.6**

(22) Anmeldetag: **11.04.81**

(54) **Schnellkupplung für Schläuche o.dgl.**

(30) Priorität: **14.04.80 US 139878**

(43) Veröffentlichungstag der Anmeldung: **21.10.81 Patentblatt 81/42**

(45) Bekanntmachung des Hinweises auf die Patenterteilung: **31.07.85 Patentblatt 85/31**

(84) Benannte Vertragsstaaten: **AT BE CH DE FR GB LI NL**

(56) Entgegenhaltungen:
**DE - A - 2 138 313**
**DE - U - 1 951 367**
**US - A - 3 730 221**
**US - A - 3 881 514**
**US - A - 4 074 698**
**US - A - 4 124 228**

(73) Patentinhaber: **DEERE & COMPANY, 1 John Deere Road, Moline Illinois 61265 (US)**

(72) Erfinder: **Shindelar, Aloysius Celestine, 7210 Hudson Heights, Hudson Iowa 50643 (US)**

(74) Vertreter: **Lins, Edgar, Dipl.-Phys., Patentanwälte Gramm + Lins Theodor-Heuss-Strasse 2, D-3300 Braunschweig (DE)**

**EP 0 038 056 B1**

Anmerkung Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die Erfindung betrifft eine Schnellkupplung für Schläuche oder dgl., bestehend aus einem Muffenteil und einem Steckerteil mit je einem im entkuppelten Zustand der Schnellkupplung selbstsperrenden Ventil, mit folgenden Merkmalen:

a) das mit einem Schlauch oder dgl. verbindbare Steckerteil ist in eine Einstecköffnung des Muffenteils eindrückbar;
b) das Muffenteil weist eine in einem Gehäuse gelagerte Steckhülse auf, deren Hohlraum über einen Fluidzulauf mit einer gehäuseseitigen Fluidleitung verbunden ist;
c) der Hohlraum ist über eine von einem inneren Ventilsitz umgebenen Verbindungsöffnung mit der Einstecköffnung verbunden;
d) im Hohlraum ist das Hauptschließelement des Muffenteil-Sperrventils gelagert und von einer Feder in Richtung Ventilsitz belastet;
e) die Schließelemente der Sperrventile liegen im gekuppelten Zustand gegeneinander an und belasten sich gegenseitig in Öffnungsrichtung, wobei der Hub des Steckerteil-Sperrventils derart begrenzt ist, daß das Muffenteil-Sperrventil im gekuppelten Zustand ständig geöffnet ist.

Eine derartige Ausführungsform läßt sich der US-A-3 881 514 entnehmen. Es handelt sich hier um eine Schnellkupplung für hydraulische Anschlüsse. Die Steckhülse ist in dem Gehäuse längsverschieblich gelagert und läßt sich durch Verschwenkung eines am Gehäuse angelenkten Hebels gegen die Wirkung einer Druckfeder in Richtung auf das Steckerteil verschieben. Hierdurch wird eine mechanische Schnappverbindung zwischen Steckerteil und Steckhülse gelöst, so daß sich das Steckerteil leichter aus der Einstecköffnung des Muffenteils herausziehen läßt. Das dem Steckerteil gegenüberliegende Ende der Steckhülse ist geschlossen ausgebildet; der Fluidzulauf steht daher nur mit der obenerwähnten Verbindungsöffnung in Verbindung. Die Sperrventile des Stecker- und Muffenteils sind jeweils als Kegelsitzventil ausgebildet. In der Steckhülse sind der mit der Einstecköffnung fluchtende Hohlraum mittig und der Fluidzulauf am Umfang angeordnet. Das Hauptschließelement ist angenähert zylindrisch ausgebildet und geht an seinem dem Steckerteil zugewandten Ende in einen runden Stößel über, der einen entsprechend ausgebildeten Stößel des Steckerteil-Sperrventils beaufschlagt.

Bei derartigen Konstruktionen ergeben sich beim Kuppeln insbesondere dann Probleme, wenn zwischen den beiden Kupplungshälften große Druckunterschiede bestehen. Ein Anlaß für einen derartigen großen Druckunterschied ist z. B. die Wärmeausdehnung der in der Hydraulikleitung stehenden Flüssigkeit. Dieses Problem taucht insbesondere bei landwirtschaftlichen Geräten auf, die über längere Zeiträume auf dem offenen Feld abgestellt werden. Unter dem Einfluß der Sonnenhitze dehnt sich die Flüssigkeit, also in der Regel das Hydrauliköl, aus und erschwert dadurch das An- bzw. Entkuppeln der Anschlußleitungen.

Die US-A-3 730 221 offenbart ebenfalls eine Schnellkupplung, bei der jedoch eine Kupplung ohne gleichzeitige Öffnung der beiden Sperrventile vorgesehen ist. Zum Öffnen der Sperrventile wird eine Steckhülse durch Beaufschlagung mit einer Druckflüssigkeit gegen das Steckerteil verschoben, wodurch sich die beiden Sperrventile gegenseitig in ihre Öffnungsstellung drücken. Zum Schließen dieser Sperrventile muß der die Steckhülse beaufschlagende Flüssigkeitsdruck abgelassen werden. Dies erfolgt durch Öffnen eines Ablaßventils.

Der Erfindung liegt somit die Aufgabe zugrunde, die eingangs erläuterte Schnellkupplung so zu verbessern, daß sich das Steckerteil in einfacher Weise an ein druckloses oder aber unter Druck stehendes Muffenteil ankuppeln bzw. sich hiervon entkuppeln läßt.

Ausgehend von der eingangs definierten Schnellkupplung wird diese Aufgabe gemäß der Erfindung durch folgende zusätzliche Merkmale gelöst:

f) Dem Hauptschließelement des Muffenteil-Sperrventils ist ein einfachwirkender Kolben zugeordnet, der in Öffnungsrichtung des Steckerteil-Sperrventils vom Fluiddruck im Hohlraum beaufschlagt ist;
g) die Steckhülse weist einen Ablaß mit einem willkürlich aufsteuerbaren Ablaßventil zur Druckentlastung der beaufschlagten Stellfläche des Kolbens und des Hohlraums auf;
h) das Hauptschließelement des Muffenteil-Sperrventils hat einen so großen Hub, daß es in gekuppeltem Zustand bei druckentlasteter Stellfläche und unter Druck stehendem Steckerteil das Steckerteil-Schließelement nicht aus seiner Schließstellung in seine Öffnungsstellung drücken kann.

Das Hauptschließelement steuert den Flüssigkeitsstrom zwischen dem Hohlraum der Steckhülse und der genannten Einstecköffnung. Dieses Hauptschließelement umfaßt das eigentliche selbstdichtende Ventil des Muffenteils und beaufschlagt außerdem das Schließelement des Steckerteils. Dieses Schließelement kann eine Kugel sein, die gegen die Wirkung einer Feder von ihrem Ventilsitz abgedrückt wird. In dieser Ventiloffenstellung kann dann die Flüssigkeit entweder in das Muffenteil hinein- oder aber aus diesem herausströmen. Das Hauptschließelement umfaßt außerdem eine konische Dichtfläche, die einem entsprechend konisch ausgebildeten Ventilsitz an der Innenwandung der Steckhülse zugeordnet ist und in Schließstellung die genannte Verbindungsöffnung blockiert.

Das Ablaßventil dient zur Steuerung des Flüssigkeitsstroms durch den Ablaß. Durch Öffnung dieses Ablasses kann die ggf. sich noch in der Steckhülse befindliche Flüssigkeit abgelassen werden. Dadurch wird sichergestellt, daß nur eine sehr geringe nicht unter Druck stehende Flüssigkeitsmenge in der Steckhülse verbleibt. Der Innenraum der Steckhülse läßt sich also druckfrei machen, wodurch die Handhabung der Schnellkupplung erleichtert wird.

Der dem Hauptschließelement des Muffenteil-Sperrventils zugeordnete Kolben soll eine Verschiebung des Hauptschließelementes gegen einen in dem Muffenteil ggf. vorhandenen erhöhten Flüssigkeitsdruck erleichtern. Dieser Kolben weist eine verhältnismäßig große, zweckmäßig plan ausgebildete Druckkolbenfläche auf, deren Außendurchmesser genau dem lichten Innendurchmesser des Hohlraumes der Steckhülse entsprechen kann, und die zu dem verschlossenen Ende der Steckhülse weist, von diesem verschlossenen Ende aber immer zumindest einen geringen Abstand aufweist. Diese Druckkolbenfläche liegt also auf der der genannten Einsteckföffnung abgewandten Seite, wobei der von dem verschlossenen Ende der Steckhülse sowie der Druckkolbenfläche selbst begrenzte Raum lediglich über einen vorzugsweise im Hauptschließelement selbst vorgesehenen Durchlaufkanal mit dem Fluidzulauf in Verbindung steht. Daher kann die Druckkolbenfläche über den genannten Zulauf mit unter Druck stehender Flüssigkeit beaufschlagt werden, die dann durch Verschiebung des Kolbens auch eine entsprechende Verschiebung des Hauptschließelementes bewirkt. Letzteres öffnet dadurch das Schließelement im Steckerteil gegen den Druck der Schließfeder, vor allem aber gegen einen ggf. sehr hohen Flüssigkeitsdruck in dem am Steckerteil angeschlossenen Schlauch und gibt dadurch den Flüssigkeitsstrom durch die genannte Verbindungsöffnung frei.

Um das An- bzw. Entkuppeln noch weiter zu erleichtern, kann an dem Gehäuse ein Nockenhebel angelenkt sein, der bei seiner Verschwenkung die in dem Gehäuse längsverschieblich gelagerte Steckhülse in Richtung auf das Steckerteil verschiebt und gleichzeitig eine Öffnung des Ablaßventils bewirkt. Durch die Hebelbetätigung läßt sich also die mechanische Verbindung zwischen den beiden Kupplungshälften leichter herstellen bzw. lösen, wobei das Kuppeln selbst zusätzlich noch durch die gleichzeitige Druckentlastung des Hohlraumes der Steckhülse erleichtert wird.

Weitere Merkmale der Erfindung sind Gegenstand der Unteransprüche und werden anhand von Ausführungsbeispielen näher erläutert.

In der Zeichnung sind einige als Beispiele dienende Ausführungsformen der Erfindung dargestellt. Es zeigt

Fig. 1 im Längsschnitt eine Kupplungsgegenhälfte mit eingedrückter Schlauch-Kupplungshälfte, wobei das Hauptschließelement der Kupplungsgegenhälfte geöffnet ist;

Fig. 2 die Darstellung gemäß Fig. 1 mit geschlossenem Hauptschließelement und einem abgewandelten Nockenhebel;

Fig. 3 in vergrößertem Maßstab eine Seitenansicht eines Ablaßventils;

Fig. 4 das Ablaßventil gemäß Fig. 3 in Stirnansicht, und

Fig. 5 im Längsschnitt und Ausschnitt das in den Fig. 1 und 2 dargestellte Hauptschließelement in einer abgewandelten Ausführungsform.

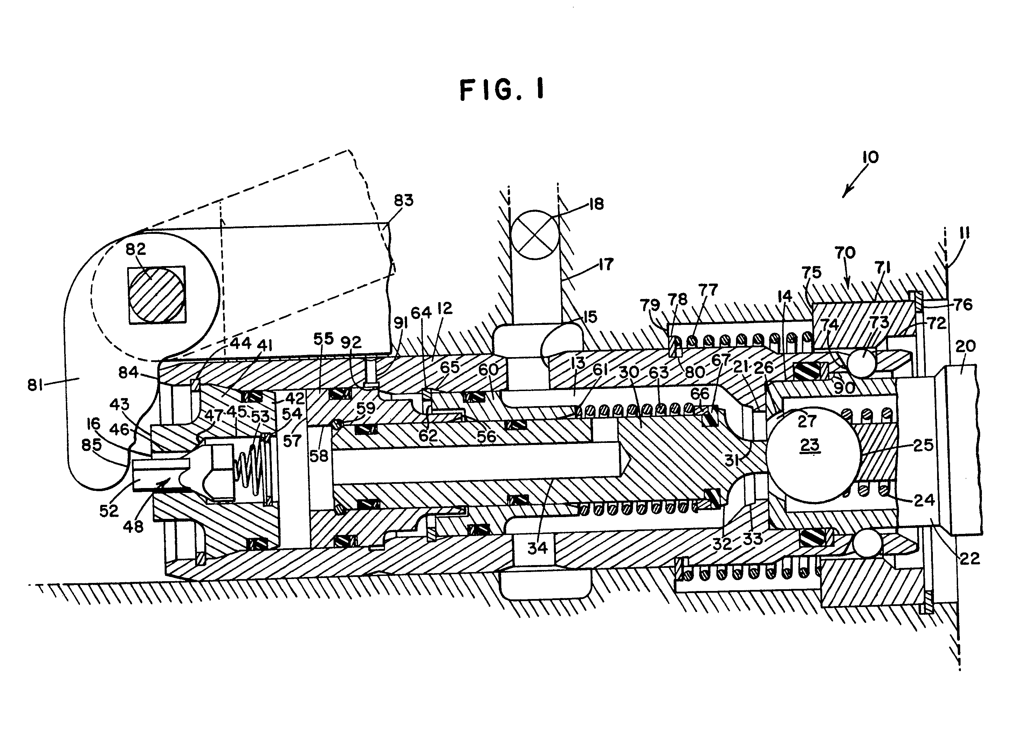

Gemäß Fig. 1 ist eine Kupplungsgegenhälfte 10 mit einer Schlauch-Kupplungshälfte 20 verbunden. Eine derartige Kupplungsgegenhälfte 10 ist ein übliches Bauteil an landwirtschaftlichen Fahrzeugen, um einen Anschluß für einen Flüssigkeitsstrom zu schaffen. In der Beschreibung dient diese Kupplungsgegenhälfte zur Verbindung zweier Hydraulikleitungen, obwohl die Schlauch-Kupplungshälfte natürlich auch für Öl, Wasser, Benzin, Luft, komprimiertes Gas u. dgl. Verwendung finden kann.

Die Begriffe rechts, links, oben bzw. unten beziehen sich lediglich auf die Darstellung in den Zeichnungen, dienen aber nicht zur einschränkenden Erläuterung der Erfindung.

Die Kupplungsgegenhälfte 10 umfaßt ein Gehäuse 11, das eine verschiebbare Steckhülse 12 umschließt. Letztere umschließt einen vorzugsweise mittig angeordneten Hohlraum 13, eine sich nach rechts erstreckende Einsteckföffnung 14, einen Zulauf 15 und einen Ablaß 16. Zulauf 15 und Ablaß 16 stehen über den Hohlraum 13 miteinander in Verbindung. Um den Umfang des Hohlraumes 13 herum können ein oder mehrere Zuläufe 15 vorgesehen sein.

Die durch eine Leitung 17 dem Zulauf 15 zugeführte Flüssigkeitsmenge wird über ein Ventil 18 gesteuert, das vorzugsweise ein Zweiwegeventil ist und den Flüssigkeitsstrom zur oder von der Kupplungsgegenhälfte reguliert. Zusätzlich zum Flüssigkeitsstrom durch das Ventil 18 kann eine kleine Flüssigkeitsmenge aus dem Ablaß 16 austreten. Diese Flüssigkeit kann in einem nicht dargestellten Behälter aufgefangen und von dort später wieder in den Kreislauf zurückgeführt werden.

Die Einsteckföffnung 14 dient zur Aufnahme der Schlauch-Kupplungshälfte 20 und ist dementsprechend nach rechts offen. Gegenüber dieser Öffnung und fluchtend hiermit ist eine Verbindungsöffnung 21 vorgesehen, die die Einsteckföffnung 14 mit dem Hohlraum 13 verbindet. Üblicherweise umfaßt die in die Einsteckföffnung 14 eingedrückte Schlauch-Kupplungshälfte 20 ein Verschließelement 22 mit einer Ventilkugel 23, einer Druckfeder 24, einem Anschlag 25 und einen Ventilsitz 26, gegen den die Ventilkugel 23 unter dem Druck der Feder anliegt. Die Schlauch-Kupplungshälfte 20 ist an dem Ende eines Schlauches montiert, der seinerseits an eine Hydraulikeinrichtung, z. B. an einen Hydraulikmotor angeschlossen ist, der dann eine Einrichtung beaufschlagt.

Beim Ankuppeln begrenzen die Druckfeder 24 und der Anschlag 25 die Bewegung der Ventilku-

gel 23 nach rechts.

In dem Hohlraum 13 der Steckhülse 12 ist verschiebbar ein Hauptschließelement 30 angeordnet, das vorzugsweise als Kegelsitzventil ausgebildet sein kann. Dieses Hauptschließelement 30 weist an seinem rechten Ende einen länglichen Stößel 31 auf, der sich durch die Verbindungsöffnung 21 hindurch bis in die Einstecköffnung 14 erstreckt, wenn das Hauptschließelement 30 nach rechts verschoben ist. Bei einer derartigen Verschiebung stößt der Stößel 31 gegen die Ventilkugel 23 der Schlauch-Kupplungshälfte 20. Unmittelbar links neben dem Stößel 31 trägt das Hauptschließelement 30 eine konische Dichtfläche 32, die einem entsprechend ausgebildeten Ventilsitz 33 auf der Innenwandung der Steckhülse 12 zugeordnet ist. Liegt die Dichtfläche 32 gegen den Ventilsitz 33 an, ist die Verbindungsöffnung 21 geschlossen. Dies ist dann der Fall, wenn das Hauptschließelement 30 in seine äußerste rechte Stellung verschoben ist. In dem Hauptschließelement 30 ist vorzugsweise ein innenliegender Durchlaufkanal 34 vorgesehen, der eine Flüssigkeitsverbindung zwischen Zulauf 15 und Ablaß 16 herstellt. Letzterer liegt links von dem Hauptschließelement 30, ist im Querschnitt vorzugsweise kreisförmig ausgebildet und fluchtet in axialer Richtung mit der Längsmittelachse der Steckhülse 12. Dieser Ablaß 16 kann in einem Endstück 41 mit auf der rechten Seite flacher Oberfläche 42 und einer linken Oberfläche 43 angeordnet und am linken Ende der Steckhülse 12 über einen Sprengring 44 festgelegt sein.

Der Ablaß 16 weist zwei verschiedene Innendurchmesser 45, 46 auf, die über einen Konus miteinander verbunden sind, der einen Ventilsitz 47 bildet. Der kleinere Durchmesser 46 liegt ganz links und somit auf der dem Hohlraum 13 abgewandten Seite. Im Ablaß 16 ist ein Ablaßventil 48, vorzugsweise ein Kegelsitzventil, angeordnet, das zwischen einer Offen- und einer Schließstellung bewegbar ist, um so den Flüssigkeitsstrom aus dem Ablaß 16 steuern zu können.

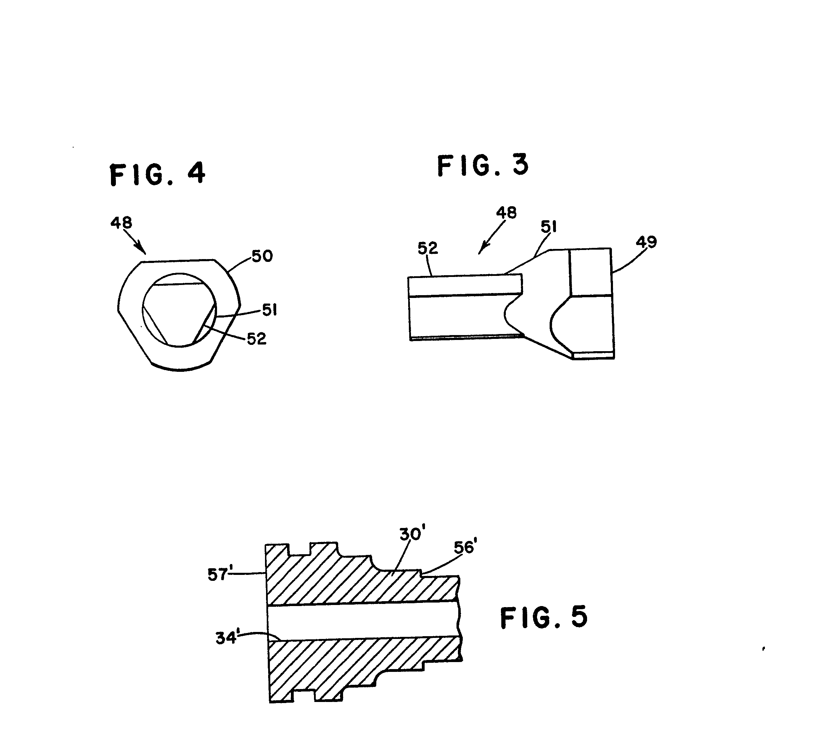

Die Fig. 3 und 4 lassen die Ausbildung des Ablaßventils 48 erkennen. Demnach weist es rechts eine plane, im Querschnitt vorzugsweise angenähert dreiecksförmig ausgebildete Oberfläche 49 mit abgerundeten Ecken 50 auf. Links von dieser flachen Oberfläche 49 ist ein sich konusförmig verjüngender Abschnitt 51 vorgesehen, der in einen zweiten länglichen Stößel 52 mit angenähert dreiecksförmigem Querschnitt übergeht. Der konusförmige Abschnitt 51 ist dem vorstehend genannten Ventilsitz 47 zugeordnet. Sowohl die Oberfläche 49 als auch der längliche Stößel 52 können eine andere Kontur aufweisen, jedoch erlaubt der dreiecksförmige Querschnitt der sich ggf. im Hohlraum 13 befindlichen Flüssigkeit, langsam aus dem Ablaß 16 abzulaufen. Dieser Abfluß bleibt so lange aufrechterhalten, bis der konusförmige Abschnitt 51 auf dem Ventilsitz 47 aufliegt.

Gemäß Fig. 1 wird das Ablaßventil 48 von einer Druckfeder 53 in Schließstellung gehalten. In dieser Stellung ragt das Ende des länglichen Stößels 52 über die linke Oberfläche 43 des Endstücks 41 hinaus. Die genannte Feder 53 stützt sich an einem im Endstück 41 gehaltenen Sprengring 54 ab. An sich ist die Anordnung einer Feder 53 nicht zwingend erforderlich, da jeder Druckanstieg in der im Hohlraum 13 befindlichen Flüssigkeit ausreicht, das Ablaßventil 48 zu schließen. Jedoch bewirkt die Feder 53 einen ständig auf das Ablaßventil 48 ausgeübten Druck in Schließstellung.

Im Hohlraum 13 ist zwischen dem Hauptschließelement 30 und dem Ablaßventil 48 ein verschiebbarer Kolben 55 angeordnet. Er ist ringförmig ausgebildet mit einer rechten Stirnfläche 56, einer linken Stirnfläche 57 und einer Innenwandung 58. Auf letzterer ist ein Sprengring 59 angeordnet, der das linke Stirnende des verschiebbaren Hauptschließelementes 30 hintergreift. Bei dem Kolben 55 sind die hydraulisch wirksamen Axialflächen 56, 57 gleichgroß. Bei der aus dem Kolben 55 und dem Hauptschließelement 30 bestehenden Steuereinheit ist die gesamte vom Druck im Hohlraum 13 in Öffnungsrichtung des Ventils 23 beaufschlagte Fläche (linke Druckkolbenfläche 57 + Querschnittsfläche vom Hauptschließelement 30) größer als die in Gegenrichtung vom gleichen Druck beaufschlagte Fläche (der Kugel 23 zugewandte Stirnfläche vom Hauptschließelement 30). Baut sich der Flüssigkeitsdruck in dem Hohlraum 13 auf, wird der Kolben 55 nach rechts gedrückt. Dadurch nimmt der Sprengring 59 das Hauptschließelement 30 mit und verschiebt es nach rechts.

Fig. 5 zeigt über den Kolben 55 eine abgewandelte Ausführungsform. Hier sind Kolben und Hauptschließelement 30′ einteilig ausgebildet; das linke Stirnende des Hauptschließelements 30′ wird also durch die Druckkolbenfläche 57′ gebildet. Das Hauptschließelement 30′ weist außerdem eine Schulter 56′ auf, die dieselbe Funktion ausübt wie die rechte Stirnfläche 56 der in Fig. 1 dargestellten Ausführungsform. Der Durchlaufkanal 34′ entspricht dem Durchlaufkanal 34. Vom Tankdruck wird nicht nur die Schulter 56′ sondern der gesamte, dreifach gestufte rechte Abschnitt des Kolbens 55′ beaufschlagt.

Gemäß Fig. 1 ist der Verschiebeweg des Kolbens 55 nach links durch die rechte Stirnfläche 42 des Endstücks 41 und nach rechts durch eine an der Innenwandung der Steckhülse 12 vorgesehene Schulter 92 begrenzt.

Innerhalb des Hohlraumes 13 ist außerdem ein Ringteil 60 vorgesehen, daß das Hauptschließelement 30 umschließt und eine rechte Stirnwandung 61 und eine linke Stirnwandung 62 aufweist. Die rechte Stirnwandung 61 liegt ständig an einer Druckfeder 63 an, die den rechten Teil des Hauptschließelementes 30 spiralförmig umschließt. Die linke Stirnfläche 62 des Ringteils 60 liegt an einem Sprengring 54 an, der in einer Ringnut 65 der Innenwandung der Steckhülse 12 sitzt. Die Kombination von Druckfeder 63 und Sprengring 64 dient zur Begrenzung des Verschiebeweges des Ringteils 60. Zwischen dem Kolben 55 und dem Ringteil 60 kann eine Entwässerungsbohrung 91 vorgesehen sein, durch die etwaige eingeschlossene Flüssigkeit — ggf. in einem Vorratsbehälter — ablaufen kann.

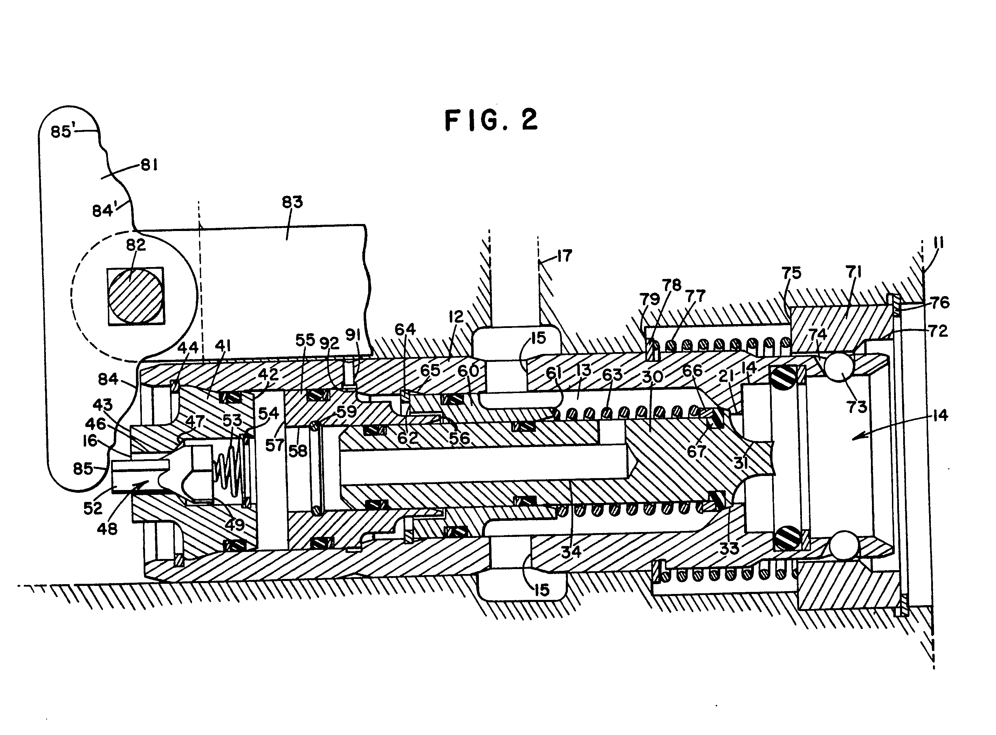

Die Druckfeder 63 stützt sich auf ihrer rechten Seite gegen einen Sprengring 66 und einen Dichtring 67 ab, die unmittelbar links von der konusförmigen Dichtfläche 32 des Hauptschließelementes 30 auf letzterem angeordnet sind. Die Druckfeder 63 drückt das Hauptschließelement 30 nach rechts, so daß die konusförmige Dichtfläche 32 an dem inneren Ventilsitz 33 anliegt, wie es Fig. 2 zeigt. Aufgrund dieser Federwirkung schließt also das Hauptschließelement 30 die Verbindungsöffnung 21 ab und blockiert dadurch den Flüssigkeitsstrom.

Das rechte Ende der Steckhülse 12 wird von Kupplungselementen 70 umgriffen, die die Schlauch-Kupplungshälfte 20 in der Einstecköffnung 74 halten. Diese Kupplungselemente 70 umfassen eine Buchse 71 mit einem ringförmigen Innenraum 72, dessen Seitenwandung vorzugsweise geneigt ausgebildet ist, um Kupplungskugeln 73 aufzunehmen, die in entsprechenden Ausnehmungen 74 im rechten Ende der Steckhülse 12 gelagert sind. Die Buchse 71 wird in dem Gehäuse 11 durch eine Schulter 75 und einen Sprengring 76 stationär gehalten.

Gegen die linke Seite der Buchse 71 liegt eine Druckfeder 77 an, die sich mit ihrem linken Ende gegen einen Sprengring 78 der Steckhülse 12 abstützt und letztere soweit nach links drückt, bis der Sprengring 78 gegen eine Schulter 79 des Gehäuses 11 anschlägt. Der Sprengring 78 liegt in einer Nut 80 in der äußeren Mantelfläche der Steckhülse 12. Unter der Wirkung der Druckfeder 77 versucht also die Steckhülse 12 eine linke Stellung einzunehmen.

Um nun die Steckhülse 12 gegen die Wirkung der Druckfeder 77 nach rechts verschieben zu können, ist ein Nockenhebel 81 vorgesehen, der mit Hilfe eines Stiftes 82 am Gehäuse 11 verschwenkbar angelenkt ist. Dieser Nockenhebel 81 weist zwei Nocken 84, 85 auf; außerhalb des Gehäuses 11 ist am Stift 82 ein Hebelarm 83 befestigt, um den Nockenhebel 81 zu verschwenken. Wird der Hebelarm 83 aus seiner in Fig. 1 dargestellten horizontalen Lage angehoben, kommen der Nocken 84 mit dem linken Stirnende der Steckhülse 12 und der Nocken 85 unmittelbar darauf mit dem Stößel 52 des Ablaßventils 48 in Kontakt.

Fig. 2 zeigt für den Nockenhebel 81 eine abgewandelte Ausführungsform, bei der vier Nocken 84, 85, 84' und 85' vorgesehen sind. Dadurch können mit nur einem Hebelarm 83 gleichzeitig zwei Kupplungsgegenhälften 10 beaufschlagt werden, von denen in Fig. 2 allerdings nur eine dargestellt ist.

Die Aufgabe des manuell oder mechanisch zu bedienenden Nockenhebels 81 liegt in erster Linie darin, die Kupplung bzw. Entkupplung der Kupplungsgegenhälfte 10 mit bzw. von der Schlauch-Kupplungshälfte 20 zu erleichtern. Dabei erhält der Nockenhebel 81 dann seine besondere Bedeutung, wenn die Schlauch-Kupplungshälfte 20 unter Druck steht.

In der Steckhülse 12 sind zahlreichte Dichtungen, z. B. O-Ringe oder Teflon-Ringe vorgesehen, um Leckagen zwischen den verschiedenen Elementen zu verhindern.

Die Wirkungsweise der Kupplungsgegenhälfte wird nachfolgend für die verschiedenen Betriebszustände erläutert:

Kupplung im drucklosem Zustand

Um die Kupplungshälfte 10 mit einer nicht unter Druck stehenden Schlauch-Kupplungshälfte 20 zu verbinden, geht man wie folgt vor. Das Hauptschließelement 30 befindet sich in seiner Schließstellung; die Verbindungsöffnung 21 ist gemäß Fig. 2 blockiert; zum Einlaß 15 strömt keine Flüssigkeit. Wenn die Bedienungsperson nun den Hebelarm 83 aus seiner horizontalen Lage anhebt, gelangt der Nocken 84 zur Anlage an der linken Stirnfläche der Steckhülse 12 und drückt diese dadurch nach rechts. Dadurch rollen die Kupplungskugeln 73 teilweise aus ihren Ausnehmungen 74 in den ringförmigen Innenraum 72 und geben so den Weg frei für die in die Einstecköffnung 14 einzuführende Schlauch-Kupplungshälfte 20. In dieser Stellung ist die Druckfeder 77 zusammengedrückt und übt auf die Steckhülse 12 eine nach links gerichtete Kraft aus. Die Steckhülse 12 wird daher versuchen, wieder in ihre Ausgangsstellung zurückzukehren, wenn der Hebelarm 83 abgesenkt wird.

Wird jedoch der Hebelarm 83 weiter angehoben, gelangt auch der zweite Nocken 85 zur Anlage an den Stößel 52 und drückt dadurch das Ablaßventil 48 nach rechts. Dadurch wird das Ablaßventil 48 geöffnet noch bevor die Kupplungskugeln 73 in den ringförmigen Innenraum 72 gelangen. Durch Öffnen des Ablasses 16 kann etwaig in der Steckhülse 12 vorhandene Flüssigkeit austreten. Dadurch wird sichergestellt, daß nur eine geringe und in jedem Fall drucklose Flüssigkeitsmenge in der Steckhülse 12 verbleibt. Die Bedienungsperson drückt dann die Schlauch-Kupplungshälfte 20 in die Einstecköffnung 14 und hält dabei den Hebelarm 83 in angehobener Stellung. Während er die Schlauch-Kupplungshälfte in der genannten Stellung festhält, senkt er den Hebelarm 83 in seine Ausgangsstellung ab. Hierdurch lösen sich die Nokken 84, 85 von der Steckhülse 12 bzw. dem Stößel 52 des Ablaßventils. Unter der Wirkung der Feder 77 gleitet daher die Steckhülse 12 in ihre linke Ausgangsstellung zurück. Dadurch werden die Kupplungskugeln 73 aus dem ringförmigen Innenraum 72 herausgezogen und gelangen wieder in ihre Ausnehmungen 74 zurück, wobei sie dann unter Druck an dem Außenumfang des Ventilschließelementes 22 anliegen. Diese Druckanlage, die üblicherweise gegen eine rechte Ringfläche eines Bundes 90 der Schlauch-Kupplungshälfte 20 erfolgt, ist ausreichend, um letzteren in der Einstecköffnung 14 festzuhalten.

Ist die Schlauch-Kupplungshälfte 20 in die Einstecköffnung 14 eingeführt, stößt der durch die Feder 63 in seiner rechten Stellung gehaltene Stößel 31 des Hauptschließelementes 30 gegen die Ventilkugel 23 und verschiebt diese nach rechts gegen die Wirkung der Feder 24 von dem Ventilsitz 26 ab, bis die Ventilkugel 23 am Anschlag 25 anliegt. In diesem Augenblick fängt das Hauptschließelement 30 an, sich nach links zu bewegen und dabei die Feder 63 zu komprimieren. Dadurch hebt die konische Dichtfläche 32 von ihrem Ventilsitz 30 ab (siehe Fig. 1); die Verbindungsöffnung 21 ist jetzt offen, so daß Flüssigkeit fließen kann, sobald die Bedienungsperson das Ventil 18 öffnet.

Um sicherzustellen, daß die Ventilkugel 23 am Anschlag 25 gehalten wird, muß die Druckfeder 63 eine höhere Federkraft aufweisen als die in der Schlauch-Kupplungshälfte 20 vorgesehene Feder 24.

Flüssigkeit kann nunmehr durch die Verbindungsöffnung 21 zu der Schlauch-Kupplungshälfte 20 und durch den Durchlaufkanal 34 zu dem Ablaß 16 strömen. Die durch den Durchlaufkanal 34 strömende Flüssigkeit kann aus dem Ablaß 16 nicht austreten, da die Feder 58 das Ablaßventil 48 so lange geschlossen hält, bis der Hebelarm 83 angehoben wird. Wäre die Feder 53 nicht vorgesehen, würde der auf die Stirnfläche 49 wirksame Flüssigkeitsdruck das Ablaßventil 48 in seine Schließstellung drücken. Ist der Ablaß 16 geschlossen, und geht man davon aus, daß sich in der Schlauch-Kupplungshälfte 20 kein Druck aufbaut, fließt Flüssigkeit, bis die Bedienungsperson das Ventil 18 schließt.

Üblicherweise werden zwei Schläuche od. dgl. an zwei Schlauch-Kupplungshälften angeschlossen und zwar für jedes Gerät. Dabei dient eine Schlauchleitung für den Vorlauf der Flüssigkeit vom Traktor zum Gerät, während die zweite Schlauchleitung den Rücklauf zum Traktor bildet. Bei dieser Anordnung würde in der Rücklaufleitung die Flüssigkeit von der Schlauch-Kupplungshälfte 20 zu der Kupplungsgegenhälfte 10 strömen. Gemäß Fig. 1 würde also die Flüssigkeit von rechts nach links durch die Verbindungsöffnung 21 strömen und von dort sowohl zum Ablaß 16 als auch zum Einlaß 15. Auch hier wird der Ablaß 16 durch die Feder 53 oder aber den Flüssigkeitsdruck geschlossen gehalten. Daher strömt die gesamte Flüssigkeit durch den Einlaß 15 nach außen, bis die Bedienungsperson den Flüssigkeitsstrom durch Schließen des Ventils 18 stoppt.

## Entkuppeln bei druckloser Situation

Um die Verbindung bei druckloser Situation zu entkuppeln, schließt die Bedienungsperson das Ventil 18 und unterbricht so den Flüssigkeitsstrom. Anschließend hebt die Bedienungsperson den Hebelarm 83 an, so daß der Nockenhebel 81 über seine Nocke 84 die Steckhülse 12 nach rechts verschiebt. Die Kupplungskugeln 73 treten wiederum in den ringförmigen Innenraum 72 ein, so daß die Schlauch Kupplungshälfte 20 freigegeben wird und herausgezogen werden kann. Unmittelbar vor dem Lösen der Kupplungskugeln 73 von der Schlauch-Kupplungshälfte 20 beaufschlagt der zweite Nocken 85 den Stößel 82 und öffnet dadurch den Ablaß 16, so daß etwaige in dem Hohlraum 13 befindliche Flüssigkeit austreten kann. Wird die Schlauch-Kupplungshälfte 20 aus der Einstecköffnung 14 herausgezogen, legt sich die konische Dichtfläche 32 des Hauptschließelementes 30 gegen den inneren Ventilsitz 33 unter Wirkung der Druckfeder 63 an und schließt dadurch die Verbindungsöffnung 21. Gleichzeitig wird die Öffnung 27 in der Schlauch-Kupplungshälfte 20 durch die Ventilkugel 23 verschlossen, die durch die Feder 24 gegen ihren Ventilsitz 26 flüssigkeitsdicht gedrückt wird. Dadurch kann keine weitere Flüssigkeit aus der Schlauchleitung austreten. Der Hebelarm 83 wird dann weiter abgesenkt; das Entkuppeln ist beendet.

## Kuppeln unter Druck

Steht die Schlauch-Kupplungshälfte 20 unter Druck, unterscheidet sich der Vorgang dadurch, daß der höhere Flüssigkeitsdruck die Öffnung der Ventilkugel 23 verhindert, wenn die Schlauch-Kupplungshälfte 20 vollständig in die Einstecköffnung 14 eingedrückt wird. Dies bedeutet, daß sich in der Kupplungsgegenhälfte 10 das Hauptschließelement 30 in seiner linken Endstellung befindet; die konische Dichtfläche 32 ist also von dem inneren Ventilsitz 33 abgehoben; die Druckfeder 63 ist zusammengedrückt; der Kolben 55 befindet sich in seiner linken Position, in die er durch das Hauptschließelement 30 durch Beaufschlagung des als Mitnehmer dienenden Sprengringes 59 verschoben wurde. Die Verschiebung des Kolbens 55 erfolgt niemals so weit nach links, daß er gegen die rechte Stirnfläche 42 des Endstücks 41 anschlägt, da die das Ringteil 60 beaufschlagende Druckfeder 63 die Linksbewegung des Hauptschließelementes 30 begrenzt. Daher wird die links liegende Druckkolbenfläche 57 des Kolbens 55 ständig von Flüssigkeit beaufschlagt.

Um das Ventilschließelement 23 zu öffnen, muß der Druck in der Steckhülse 12 erhöht werden. Hierzu wird das Ventil 18 geöffnet, wodurch die gesamte einströmende Flüssigkeit durch den Durchlaufkanal 34 hindurchfließt, da die Verbindungsöffnung 21 verschlossen ist. Da auch der Ablaß 16 unter Wirkung der Feder 53 verschlossen ist, kommt es innerhalb der Steckhülse 12 zu einem Druckanstieg. Übersteigt die aufgrund dieses Druckanstiegs auf die große Druckkolbenfläche 57 des Kolbens 55 ausgeübte Kraft in Verbindung mit der Kraft 63 die Widerstandskräfte, die sich aus dem von rechts auf die Ventilkugel 23 wirkenden Flüssigkeitsdruck sowie aus dem Druck der Feder 24 ergeben, erfolgt eine Verschiebung des Kolbens 55 und damit auch des Hauptschließelementes 30 nach rechts. Dadurch drückt dann der Stößel 31 die Ventilkugel 23 aus ihrem Ventilsitz 26 und gibt die Öffnung 27 zwischen den beiden Kupplungshälften frei, so daß Flüssigkeit durch die Verbindungsöffnung 21 hindurchströmen kann.

Der in der Kupplungsgegenhälfte 10 erforderliche Druck um vorstehenden Ablauf zu bewirken ist erheblich geringer als der Innendruck in der Schlauch-Kupplungshälfte 20. Dieser erforderliche Druck ist direkt proportional der Flächendifferenz zwischen der linken Druckkolbenfläche 57 des Kolbens 55 und der von dem Ventilsitz 26 umschlossenen Oberfläche.

Entkuppeln unter Druck

Das Entkuppeln der unter Druck stehenden Schlauch-Kupplungshälfte 20 entspricht der vorstehend erläuterten Entkupplung bei druckloser Situation.

**Patentansprüche**

1. Schnellkupplung für Schläuche oder dgl., bestehend aus einem Muffenteil (10) und einem Steckerteil (20) mit je einem im entkuppelten Zustand der Schnellkupplung selbstsperrenden Ventil (30, 33; 23, 26), mit folgenden Merkmalen:

a) das mit einem Schlauch oder dgl. verbindbare Steckerteil (20) ist in eine Einstecköffnung (14) des Muffenteils (10) eindrückbar;
b) das Muffenteil (10) weist eine in einem Gehäuse (11) gelagerte Steckhülse (12) auf, deren Hohlraum (13) über einen Fluidzulauf (15) mit einer gehäuseseitigen Fluidleitung (17) verbunden ist;
c) der Hohlraum (13) ist über eine von einem inneren Ventilsitz (33) umgebenen Verbindungsöffnung (21) mit der Einstecköffnung (14) verbunden;
d) im Hohlraum (13) ist das Hauptschließelement (30) des Muffenteil-Sperrventils gelagert und von einer Feder (63) in Richtung Ventilsitz (33) belastet;
e) die Schließelemente (30, 23) der Sperrventile liegen im gekuppelten Zustand gegeneinander an und belasten sich gegenseitig in Öffnungsrichtung, wobei der Hub des Steckerteil-Sperrventils (23, 26) derart begrenzt ist, daß das Muffenteil-Sperrventil (30, 33) im gekuppelten Zustand ständig geöffnet ist;

gekennzeichnet durch folgende Merkmale:

f) dem Hauptschließelement (30) des Muffenteil-Sperrventils ist ein einfachwirkender Kolben (55) zugeordnet, der in Öffnungsrichtung des Steckerteil-Sperrventils (23, 26) vom Fluiddruck im Hohlraum (13) beaufschlagt ist;
g) die Steckhülse (12) weist einen Ablaß (16) mit einem willkürlich aufsteuerbaren Ablaßventil (48) zur Druckentlastung der beaufschlagten Stellfläche (57) des Kolbens (55) und des Hohlraums (13) auf;
h) das Hauptschließelement (30) des Muffenteil-Sperrventils hat einen so großen Hub, daß es in gekuppeltem Zustand bei druckentlasteter Stellfläche (57) und unter Druck stehendem Steckerteil (20) das Steckerteil-Schließelement (23) nicht aus seiner Schließstellung in seine Öffnungsstellung drücken kann.

2. Schnellkupplung nach Anspruch 1, gekennzeichnet durch folgende Merkmale:

a) zur Erleichterung der Entkupplung ist die Steckhülse (12) in dem Gehäuse (11) längsverschieblich gelagert;
b) das Hauptschließelement (30) weist einen eine Verbindung zwischen Fluidzulauf (15) und Ablaß (16) bildenden Durchlaufkanal (34) sowie an seinem einen Ende neben seiner dem Ventilsitz (33) zugeordneten Dichtfläche (32) einen länglichen Stößel (31) auf, der sich in Absperrstellung des Hauptschließelementes (30) bis in die Einstecköffnung (14) erstreckt und bei eingedrücktem Steckerteil (20) dessen Schließelement (23) beaufschlagt;
c) an dem Gehäuse (11) ist ein Nockenhebel (81) angelenkt, der bei seiner Verschwenkung eine Längsverschiebung der Steckhülse (12) in Richtung auf das Steckerteil (20) sowie eine Öffnung des Ablaßventils (48) bewirkt.

3. Schnellkupplung nach Anspruch 1 oder 2, dadurch gekennzeichnet, daß das Hauptschließelement (30) ein Kegelsitzventil ist.

4. Schnellkupplung nach Anspruch 1, 2 oder 3, dadurch gekennzeichnet, daß das Ablaßventil (48) ein Kegelsitzventil ist.

5. Schnellkupplung nach Anspruch 4, dadurch gekennzeichnet, daß sich das Ablaßventil (48) mit einem Stößel (52) durch den Ablaß (16) hindurch bis jenseits der Ablaßöffnung erstreckt.

6. Schnellkupplung nach einem der Ansprüche 2 bis 5, dadurch gekennzeichnet, daß der Nockenhebel (81) zwei Nocken (84, 85) aufweist, von denen der eine (84) die Steckhülse (12) und der andere (85) das Ablaßventil (48) beaufschlagen.

7. Schnellkupplung nach einem der vorhergehenden Ansprüche, dadurch gekennzeichnet, daß der Kolben (55) im Hohlraum (13) der Steckhülse (12) zwischen dem Hauptschließelement (30) und einem verschlossenen Ende (41) der Steckhülse (12) gelagert ist.

8. Schnellkupplung nach Anspruch 7, dadurch gekennzeichnet, daß das Hauptschließelement (30) in dem Kolben (55) längsverschiebbar gelagert ist, der einen das Hauptschließelement (30) hintergreifenden Mitnehmer (59) aufweist (Fig. 1).

9. Schnellkupplung nach Anspruch 7, dadurch gekennzeichnet, daß Kolben (55) und Hauptschließelement (30) einstückig ausgebildet sind (Fig. 5).

10. Schnellkupplung nach einem der Ansprüche 2 bis 9, gekennzeichnet durch folgende Merkmale:

a) in der Steckhülse (12) sind der mit der Einstecköffnung (14) fluchtende Hohlraum (13) mittig, der Fluidzulauf (15) am Umfang und der Ablaß (16) axial angeordnet;
b) das Hauptschließelement (30) ist zylindrisch, sein innenliegender Durchlaufkanal (34) eng und sein Stößel (31) rund ausgebildet;
c) an der Steckhülse (12) sind Kupplungselemente (70) vorgesehen, die das Steckerteil (20) in der Einstecköffnung (14) halten.

11. Schnellkupplung nach einem der vorhergehenden Ansprüche, dadurch gekennzeichnet, daß das Ablaßventil (48) durch eine Feder (53) in seine Schließstellung gedrückt wird.

## Claims

1. A rapid action coupling for hoses or the like, comprising a socket section (10) and a plug section (20), each having a valve (30, 33; 23, 26) being self-sealing in the uncoupled position of the raped action coupling, and further comprising the following features:

a) said plug section (20) being connectable to a hose or the like can be pushed into an engagement opening (14) of the socket section (10);
b) said socket section (10) has a receptacle (12) positioned in a housing (11), the cavity (13) of said receptacle being connected to a fluid conduit (17) in the housing by a fluid inlet (15);
c) said cavity (13) is connected to said engagement opening (14) by a passageway (21) being surrounded by an interior valve seat (33);
d) in said cavity (13) the main valve element (30) of the socket-section self-sealing valve is positioned and biased by a spring (63) in the direction of the valve seat (33); and
e) the valve elements (30, 23) of said self-sealing valves are positioned against each other in the coupled position and load each other in opening direction, whereby the lift of said plug-section self-sealing valve (23, 26) is limited such that the socket-section self-sealing valve (30, 33) is always opened in the coupled position,

characterized by the following features:

f) a single-acting piston (55) is allocated to the main valve element (30) of the socket-section self-sealing valve, said single-acting piston being actuated in the opening direction of the plug-section self-sealing valve (23, 26) by the fluid pressure in the cavity (13);
g) said receptacle (12) has an outlet (16) with an arbitrarily controllable outlet valve (48) for pressure release of the actuated surface (57) of the piston (55) and of the cavity (13);
h) said main valve element (30) of the socket-section self-sealing valve has such a long valve lift that it cannot force-open in the coupled position the plug-section valve element (23) from its closed position into its open position, when said actuated surface (57) is pressure released and when said plug section (20) is pressurized.

2. A coupling according to claim 1, characterized by the following features:

a) in order to facilitate the uncoupling, said receptacle (12) is axially movably positioned within the housing (11);
b) said main valve element (30) comprises a passage (34) communicating between said fluid inlet (15) and outlet (16) and further an elongated stem (31) positioned at one end of said main valve element adjacent to its sealing surface (32) which is allocated to the valve seat (33), said elongated stem projecting, in the closed position of the main valve element (30), into the engagement opening (14) and actuating the valve element (23) of the plug section (20) when pressed in;
c) a cam lever (81) is pivotally attached to said housing (11), for longitudinally moving the receptacle (12) in direction to the plug section (20) as well as for opening the outlet valve (48).

3. A coupling according to claim 1 or 2, wherein the main valve element (30) is a conical seat valve.

4. A coupling according to claim 1, 2 or 3, wherein the outlet valve (48) is a conical seat valve.

5. A coupling according to claim 4, wherein said outlet valve (48) comprises a stem (52) extending through the outlet (16) beyond the outlet opening.

6. A coupling according to one of the claims 2 to 5, wherein said cam lever (81) comprises two cams (84, 85), one cam (84) actuating said receptacle (12) and the second cam (85) actuating the outlet valve (48).

7. A coupling according to one of the preceding claims, wherein the piston (55) is positioned in the cavity (13) of said receptacle (12) between the main valve element (30) and a closed end (41) of said receptacle (12).

8. A coupling according to claim 7, wherein the main valve element (30) is axially movably positioned in said piston (55) which comprises a carrier (59) engaging behind the main valve element (30) (fig. 1).

9. A coupling according to claim 7, wherein piston (55) and main valve element (30) are formed in one piece (fig. 5).

10. A coupling according to one of the claims 2 to 9, characterized by the following features:

a) in the receptacle (12), said cavity (13) aligning with said engagement opening (14) is centrally located, said fluid inlet (15) is peripherally located and said outlet (16) is axially located;
b) said main valve element (30) is cylindrical, its internal passage (34) is narrow and its stem (31) is circular;
c) coupling means (70) are secured to said receptacle (12) for holding said plug section (20) in said engagement bore (14).

11. A coupling according to one of the preceding claims, wherein said outlet valve (48) is biased by a spring (53) to its closed position.

**Revendications**

1. — Raccord rapide pour tuyau ou analogue, constitué par une partie femelle (10) et une partie mâle (20) comportant chacune un clapet (30, 33; 23, 26) assurant l'auto-étanchéité dans la condition de désaccouplement du raccord rapide, présentant les particularités suivantes:

(a) la partie mâle (20) pouvant être reliée à un tuyau ou analogue peut être engagée ou insérée par poussée dans un orifice d'engagement (14) de la partie femelle (10);
(b) la partie femelle (10) comporte une douille de réception (12) montée dans un corps (11) et dont la cavité (13) est reliée par un orifice d'admission de fluids (15) à un conduit de fluide (17) prévu du côté du corps;
(c) la cavité (13) est reliée à l'orifice d'engagement (14) par un orifice de liaison (21) entourant un siège de clapet intérieur (33);
(d) l'élément obturateur principal (30) du clapet de fermeture de la partie femelle est monté dans la cavité (13) et est sollicité par un ressort (63) en direction du siège de clapet (33);
(e) les éléments obturateurs (30, 23) des clapets de fermeture sont appliqués l'un contre l'autre dans la condition d'accouplement et se sollicitent réciproquement dans la direction d'ouverture, la course du clapet de fermeture (23, 26) de la partie mâle étant limitée de façon telle que le clapet de fermeture (30, 33) de la partie femelle soit constamment ouvert dans la condition d'accouplement;

caractérisé par les particularités suivantes:

(f) il est prévu en combinaison avec l'élément obturateur principal (30) du clapet de fermeture de la partie femelle un piston à simple effet (55) qui est soumis à l'effet de la pression de fluide régnant dans la cavité (13) dans le sens d'ouverture du clapet de fermeture (23, 26) de la partie mâle;
(g) la douille (12) présente un orifice d'ecoulement (16) associé à un clapet d'écoulement (48) pouvant être commandé positivement pour la suppression ou détente de la pression sur la surface de positionnement (57) du piston (55) soumise à l'effet de la pression et dans la cavité (13);
(h) l'élément obturateur principal (30) du clapet de fermeture de la partie femelle a une course de valeur telle que, dans la condition d'accouplement, lorsque la surface de positionnement (57) n'est pas soumise à l'effet de la pression tandis que la partie mâle (20) est sous pression, l'élément obturateur (23) de la partie mâle ne puisse pas être repoussé par cet élément obturateur principal de sa position de fermeture jusque dans sa position d'ouverture.

2. — Raccord rapide suivant la revendication 1, caractérisé par les particularités suivantes:

(a) pour faciliter la séparation ou le désaccouplement, la douille (12) est montée de façon à pouvoir coulisser longitudinalement dans le corps (11);
(b) l'élément obturateur principal (30) comporte un canal de passage (34) établissant une communication ou liaison entre l'orifice d'admission du fluide (15) et l'orifice d'écoulement (16) , ainsi qu'à l'une de ses extrémités, à côté de sa surface d'étanchéité (32) conjuguée au siége de clapet (33), un poussoir allongé (31) qui, dans la position de fermeture de l'élément obturateur principal (30), s'étend jusque dans l'orifice d'engagement (14), et qui agit sur l'élément obturateur (23) de la partie mâle (20) lorsque celle-ci est enfoncée dans la partie femelle;
(c) un levier-came (81) est articulé sur le corps (11) et assure, lors de son pivotement, un déplacement longitudinal de la douille (12) en direction de la partie mâle (20), ainsi que l'ouverture du clapet d'écoulement (48).

3. — Raccord rapide suivant la revendication 1 ou 2, caractérisé en ce que l'élément obturateur principal (30) est constitué par un clapet à pointeau ou à siège conique.

4. — Raccord rapide suivant la revendication 1, 2 ou 3, caractérisé en ce que le clapet d'écoulement (48) est un clapet à pointeau ou à siège conique.

5. — Raccord rapide suivant la revendication 4, caractérisé en ce que le clapet d'écoulement (48) s'étend par un poussoir (52) à travers l'orifice d'écoulement (16), jusqu'au-delà de cet orifice d'écoulement.

6. — Raccord rapide suivant l'une quelconque des revendications 2 à 5, caractérisé en ce que le levier-came (81) comporte deux cames (84, 85) parmi lesquelles l'une (84) agit sur la douille (12) tandis que l'autre (85) agit sur le clapet d'écoulement (48).

7. — Raccord rapide suivant l'une quelconque des revendications précédentes, caractérisé en ce que le piston (55) est monté dans la cavité (13) de la douille (12) entre l'élément obturateur principal (30) et une extrémité fermée (41) de la douille (12).

8. — Raccord rapide suivant la revendication 7, caractérisé en ce que l'élément obturateur principal (30) est monté de manière à pouvoir coulisser longitudinalement dans le piston (55), qui comporte un élément d'entraînement (59) s'engageant derrière l'élément obturateur principal (30) (fig. 1).

9. — Raccord rapide suivant la revendication 7, caractérisé en ce que le piston (55) et l'élément obturateur principal (30) sont d'un seul tenant (fig. 5).

10. — Raccord rapide suivant l'une quelconque des revendications 2 à 9, caractérisé par les particularités suivantes:

(a) dans la douille (12), la cavité (13) alignée avec l'orifice d'engagement (14) est disposée centralement, l'orifice d'admission du fluide (15) se trouve à la periphérie et l'orifice d'écoulement (16) est disposé axialement;
(b) l'élément obturateur principal (30) est cylindrique, son canal de passage intérieur (34) étant étroit et son poussoir (31) ayant une forme circulaire;
(c) il est prévu sur la douille (12) des éléments d'accouplement (70) qui retiennent la partie mâle (20) dans l'orifice d'engagement (14).

11. — Raccord rapide suivant l'une quelconque des revendications précédentes, caractérisé en ce que le clapet d'écoulement (48) est repoussé dans sa position de fermeture par un ressort (53).

FIG. 1

11
76
72
14
71
73
74
75
14
21
31
33
66
67
77
78
79
30
63
13
34
17
61
15
15
60
56
12
65
62
64
91
59
92
55
58
57
83
42
54
53
41
49
47
44
81
82
84'
84
43
46
16
85
52
48
85'

FIG. 2

49
51
48
52

FIG. 3

FIG. 4

56'
30'
57'
34'

FIG. 5